# EUROPEAN PATENT SPECIFICATION

(11) **EP 4 078 927 B1**
(45) Date of publication and mention of the grant of the patent: **25.06.2025**
(21) Application number: 19829207.0
(22) Date of filing: 20.12.2019
(51) Int. Cl.: H04L 67/10, G06F 9/50, G06N 3/06

(54) **DYNAMIC DISTRIBUTION OF A COMPUTATIONAL GRAPH**
DYNAMISCHE VERTEILUNG EINER RECHNUNGSGRAFIK
DISTRIBUTION DYNAMIQUE D'UN GRAPHE DE CALCUL

(43) Date of publication of application: 26.10.2022
(73) Proprietor: TELEFONAKTIEBOLAGET LM ERICSSON (PUBL), 164 83 Stockholm (SE)
(72) Inventor: JIMÉNEZ, Jaime, 00530 HELSINKI (FI); KERÄNEN, Ari, 00210 HELSINKI (FI); DOYU, Hiroshi, 02120 ESPOO (FI)
(74) Representative: Ericsson
(86) International application number: PCT/EP2019/086735
(87) International publication number: WO 2021/121628

(56) References cited:
- WO-A1-2019/151984
- US-A1- 2016 218 992
- US-A1- 2018 247 197

## Description

### TECHNICAL FIELD

Disclosed are embodiments related to systems and methods for the dynamic distribution of a computational graph (e.g., a computational graph created by a machine learning system, which is also known as an Artificial Intelligence (AI) model).

### BACKGROUND

Machine learning is a method of data analysis that automates the creation of a model (e.g., function), which can be represented in the form of a computational graph. Machine learning is a branch of artificial intelligence that is based on the idea that systems can learn from data, identify patterns, and make decisions with reduced human intervention.

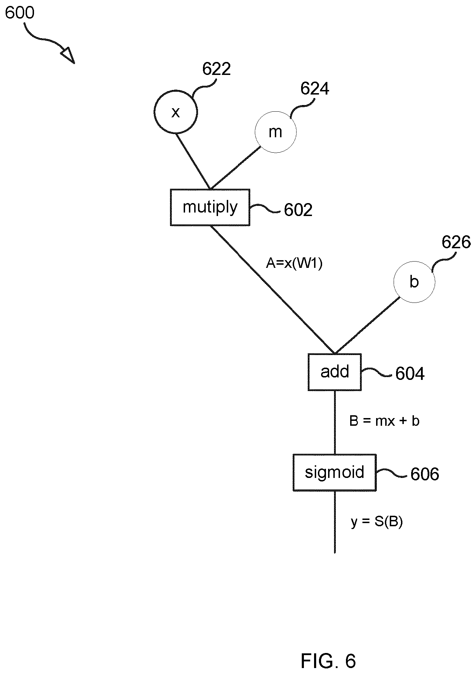

Through machine learning, a computational graph designed to perform particular task(s) (e.g., image recognition) may be obtained. The computational graph defines a set of one or more operations (a.k.a., "compute functions") and, for each operation, a set of one or more inputs to the operation. Accordingly, a computational graph can be represented by a directed graph comprising a set of nodes, where each node corresponds to either an operation or an input to an operation. FIG. 6 illustrates an exemplary computational graph 600, which represents the function: y= S(B), where B = mx + b and S() is a sigmoid function. As shown in FIG. 6, computational graph 600 comprises a set of nodes, where each rectangular node (e.g., 602, 604, and/or 606) represents an operation (e.g., multiplication, addition, sigmoid, etc.) and each circular node (e.g., 622, 624, and/or 626) represents an input to an operation. As also shown in FIG. 6, the output of an operation can be an input to another operation. One of popular computational graph formats is the Open Neural Network Exchange (ONNX). ONNX provides the advantage of allowing computational graphs to be shared among different frameworks and platforms for interoperability.

US2018247197 A1 discloses a method, system, and apparatus for receiving a request to process a computational graph. Processing comprises obtaining data representing the computational graph, wherein each node represents a respective operation and wherein each directed edge connects a respective first node to a respective second node that receives, as input, an output of an operation represented by the respective first node. Further, the method comprises identifying a plurality of available devices for performing the requested operation, partitioning the computational graph into a plurality of subgraphs where each subgraph comprises one or more nodes in the computational graph, and assigning, for each subgraph, the operations represented by the one or more nodes in the subgraph to a respective available device in the plurality of available devices.

US 2016218992 A1 discloses a CoAP communication method and a system for performing the method, wherein the method includes receiving a POST message for a registration request, verifying whether the registration request is valid in response to the POST message, extracting a unit identifier of at least one resource associated with a node for a message payload of the POST message, and returning a response message.

### SUMMARY

Certain challenges presently exist. For example, in some use cases, a computational graph can be too resource consuming for a single device (e.g., an Internet-of-Things (IoT) device) to execute (i.e., perform all of the operations defined by the computational graph). To solve this problem, according to some embodiments, the set of operations defined by the computational graph are processed in a distributed manner (especially in a constrained environment) such that a group of devices (e.g., resource constrained devices) cooperate to perform the set of operations.

Accordingly, in one aspect a method for generating output data based on a computational graph (i.e., a method for executing the computational graph) is provided, where the computational graph defines a set of operations, wherein the set of operations includes a first subset of one or more operations and a second subset of one or more operations. The method includes a representational state transfer (REST) server storing information related to the computational graph. The information related to the computational graph may include information representing the first subset of operations. The method may further include the REST server receiving input data and the REST server performing the first subset of operations using the received input data, thereby producing first output data corresponding to the first subset of operations. The method further includes the REST server exposing the first output data as a discoverable resource by generating a link and storing the link in a resource directory, so that the first output data is discoverable using RESTful operations by other devices.

In another aspect, a method is provided that includes obtaining a representation of a computational graph that defines a set of two or more operations. The method may include selecting a first subset of one or more operations from the set of two or more operations and selecting a second subset of one or more operations from the set of two or more operations. The method may further include assigning the first subset of operations to at least a first device of the REST based distributed IoT network, assigning the second subset of operations to at least a second device of the REST based distributed IoT network, and configuring the first device to expose as a first discoverable resource first output data generated by the first device as a result of the first device performing the first subset of operations. The method may further include configuring the second device to expose as a second discoverable resource second output data generated by the second device as a result of the second device performing the second subset of operations.

In another aspect, a computer program is provided. The computer program includes instructions which when executed by processing circuitry cause the processing to perform a method for generating output data based on a computational graph (i.e., a method for executing the computational graph). The computational graph defines a set of operations, wherein the set of operations includes a first subset of one or more operations and a second subset of one or more operations. The method includes a REST server storing information related to the computational graph. The information related to the computational graph may include information representing the first subset of operations. The method may further include the first device receiving input data and the first device performing the first subset of operations using the received input data, thereby producing first output data corresponding to the first subset of operations. The method further includes the REST server exposing the first output data as a discoverable resource by generating a link and storing the link in a resource directory, so that the first output data is discoverable using RESTful operations by other devices.

In another aspect, a computer program is provided. The computer program includes instructions which when executed by processing circuitry cause the processing to perform a method including obtaining a representation of a computational graph. The computational graph may define a set of two or more operations. The method may further include selecting a first subset of one or more operations from the set of two or more operations and selecting a second subset of one or more operations from the set of two or more operations. The method may further include assigning the first subset of operations to at least a first device of the REST based distributed IoT network, assigning the second subset of operations to at least a second device of the REST based distributed IoT network, and configuring the first device to expose as a first discoverable resource first output data generated by the first device as a result of the first device performing the first subset of operations. The method may further include configuring the second device to expose as a second discoverable resource second output data generated by the second device as a result of the second device performing the second subset of operations.

In another aspect, a REST server for generating output data based on a computational graph is provided. The REST server is adapted to store information related to the computational graph, the computational graph defining a set of operations. The set of operations includes a first subset of one or more operations and a second subset of one or more operations, and further the information related to the computational graph includes information representing the first subset of operations. The REST server is further adopted to receive input data, perform the first subset of operations using the received input data, thereby producing first output data corresponding to the first subset of operations, and expose the first output data as a discoverable resource by generating a link and storing the link in a resource directory, so that the first output data is discoverable using RESTful operations by other devices.

In another aspect, a REST server of a REST based distributed IoT network is provided. The REST server is adapted to obtain a representation of a computational graph, the computational graph defining a set of two or more operations. The REST server is further adapted to select a first subset of one or more operations from the set of two or more operations, select a second subset of one or more operations from the set of two or more operations, assign the first subset of operations to at least a first device of the REST based distributed IoT network, and the second subset of operations to at least a second device of the REST based distributed IoT network. The REST server is further adapted to configure the first device to expose as a first discoverable resource first output data generated by the first device as a result of the first device performing the first subset of operations and configure the second device to expose as a second discoverable resource second output data generated by the second device as a result of the second device performing the second subset of operations.

### BRIEF DESCRIPTION OF THE DRAWINGS

The accompanying drawings, which are incorporated herein and form part of the specification, illustrate various embodiments.
FIG. 1 is a message flow diagram according to an embodiment.
FIG. 2 is a message flow diagram according to an embodiment.
FIG. 3 is a message flow diagram according to an embodiment.
FIG. 4 is a message flow diagram according to an embodiment.
FIG. 5 is a message flow diagram according to an embodiment.
FIG. 6 shows an exemplary computational graph.
FIG. 7 illustrates an exemplary system 700.
FIG. 8 is a flow chart illustrating a process according to some embodiments.
FIG. 9 is a flow chart illustrating a process according to some embodiments.
FIG. 10 is a flow chart illustrating a process according to some embodiments.
FIG. 11 is a block diagram illustrating an apparatus according to some embodiments.

### DETAILED DESCRIPTION

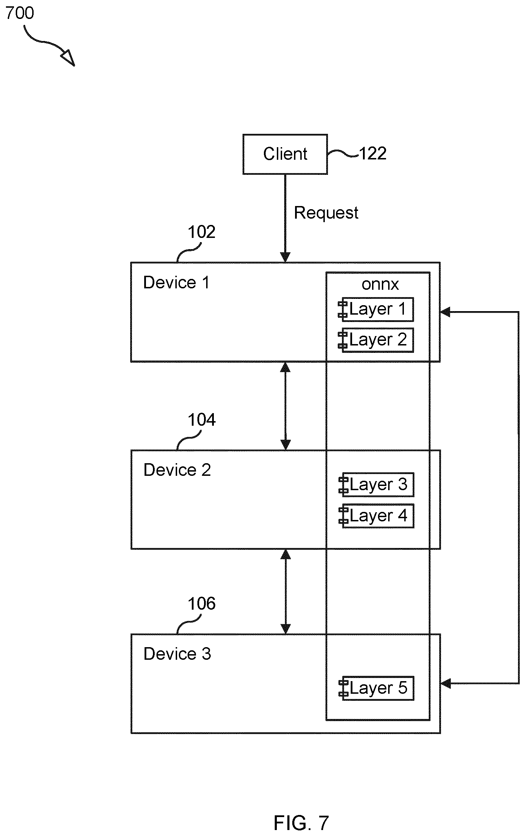

FIG. 7 illustrates a system 700 for executing a computational graph (i.e., performing the operations defined by the computational graph) that defines a set of operations and the inputs for each defined operation. The system 700 may be a representational state transfer (REST) based distributed IoT network. As shown in FIG. 7, the system 700 may comprise a client 122, a first device 102 that stores first information identifying a first subset of the operations and the inputs for these operations (denoted in FIG. 7 as Layer 1 and Layer 2), a second device 104 that stores second information identifying a second subset of the operations and the inputs for these operations (denoted in FIG. 7 as Layer 3 and Layer 4), and a third device 106 that stores third information identifying a third subset of the operations and the inputs for these operations (denoted in FIG. 7 as Layer 5). In the system 700, upon first device 102 receiving a request from the client 122, first device 102 begins to execute the computational graph (i.e., performs the Layer 1 and Layer 2 operations).

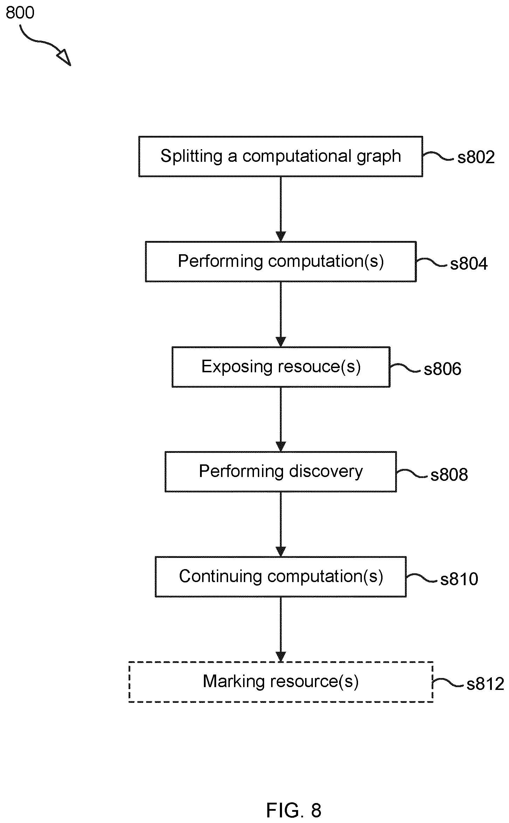

FIG. 8 illustrates a process 800 for executing a computational graph. The process 800 may begin with step s802.

Step s802 comprises splitting a computational graph (e.g., ONNX graph) into multiple operations (e.g., batch normalization or linear classifier) that can be deployed on devices to perform inference and/or learning. Each device that is a part of a distributed system may execute one or more of the operations. For example, in the system 700, the first device 102 may be configured to perform layer 1 and 2 calculations of the computational graph (e.g., ONNX graph), the second device 104 may be configured to perform layer 3 and 4 calculations of the computational graph, and the third device 106 may be configured to perform layer 5 calculation of the computational graph.

From (e.g., ONNX) operator description, each device may know what type of input data each device should consume and what type of output data each device should generate.

Input interface of each device may be described using a resource identifier (e.g., a Uniform Resource Locator (URL)) (a.k.a., "link") format (e.g., CoRE link format or Constrained Resource Identifier) to enable dynamic discovery of the input interface. The link corresponding to an input interface of each device may be discovered from a host or may be stored in a CoRE Resource Directory (RD) for robust discovery (especially when nodes are not always available or are not easily discoverable). The link may be annotated based on how much or how frequently data needs to be exchanged to run a distributed algorithm. This information may be used in later steps of the process 800 to choose which node and which communication link should be used for a particular part of the computational graph.

Step s804 comprises performing computations. More specifically, when input data is available to a device, the device computes a subset of the graph (i.e., performs at least one operation defined by the graph, thereby producing output data). After the device finishes a computation corresponding to the subset of operation(s), the device may store the generated output data in the device. The generated output data may be treated as a RESTful resource.

Step s806 comprises exposing the output data as a resource. The device is a REST server (e.g. CoAP server or HTTP server) and it exposes the output data as a resource and generates a link for that purpose (e.g., <coap://device1/nn>;rt="data" where "nn" identifies the output data on device 1). Once the resource is exposed it can be discovered, it can be observed, it can be followed, it can be traced, using standard RESTful operations. To enable discovery, the links are stored in a directory service, such as a Resource Directory (RD). As illustrated above, the device may expose the output data using the standard "rt" ("resource type") description, or it may use a new attribute defined for this purpose (e.g., "onnxid"). The device may also assign a specific link target attribute that characterizes the result of a computation (e.g., 'voice data' or 'graph-42-node-6').

Example of a link using ONNX endpoint (layer) IDs:
<coap://device1/nn/>;onnxid=layer3.

Example of a link using CoAP resource type (rt): <coap://device1/nn>;rt="voice data" or <coap://device1/nn>;rt="graph-42-node-6".

Both types of link enable a client to query for resources from servers that match the "resource type" or "ONNX ID." An example of the query message is: GET /.well-known/core?onnxid=layer3.

Step s808 comprises discovering a resource. For example, the device may occasionally -- e.g., periodically (e.g., ever few minutes/hours/etc.) or based on a trigger or external interruption -- perform discovery of resource(s) of the right resource type 'rt' (or any similar attribute). For instance, when each device awakes, the device may perform discovery of resource(s) of the right resource type 'rt' (or any similar attribute). This way, each device can dynamically discover computational graph neighbors every time it wakes up or periodically or in response to a trigger. This discovery process is especially useful for battery-based sleepy devices. The discovery may be used to find intermediate states in the computation that the device could task itself to do. There are two types of discoveries: (1) discovering from where data should be retrieved ("pull mode") and (2) discovering to where data should be sent next ("push mode").

In the discovery step, the devices that are aware of network capabilities (e.g., bandwidth, cost, latency) may take into account data size/frequency annotations from the step s802 to optimize which devices and links should be used based on discovery.

Instead of performing discovery every time a device wakes up, the discovery may be performed only at the beginning (e.g., after multiple operations of a computational graph are divided among nodes - i.e., after performing the step s802) if the arrangement of computational devices and flow of data is static.

An example of link that contains metadata about network capabilities:
<coap://device1/nn/>;onnxid=layer3;bwlimit=100bps

Step s810 comprises performing further computations. For example, once a resource is found and fetched, the computation step in the step s804 and the exposing step in the step s806 may be repeatedly performed.

Step s812 (which may be optional) comprises sending a message to mark a resource as processed. More specifically, for example, once the computation of an operation ends, a message may be sent to mark the resource as processed. Depending on the configuration of the system 700, the consumed intermediate results may be removed or stored for later inspection (e.g., tracing using the links). In other embodiments, instead of sending the message to mark the resource as processed, the resource may be given a lifetime after which the resource is automatically removed or stored.

### Data Interchange Format

The data exchanged among the devices 102, 104, and/or 106 may have a format defined by a new media type (e.g., 'application/ml-data+json' or 'application/ml-data+cbor'). The new media type may have the following structure:
Input: A set of ONNX standard data types [ONNX-data] formatted as JSON/CBOR arrays, maps, and values.
Output: Similar to the input.
Provenance: Defining where data comes from, offering some confidence of reliability of the data as well as a signature indicating securely which node has produced the data.

By using a basic format common for existing REST based IoT systems for the input and output data, the overhead for constrained devices may be reduced and existing tools and code may be used more efficiently. The provenance mechanism may enable securing a distributed computing in a way that is not currently possible with conventional systems.

### Exemplary Message Flows

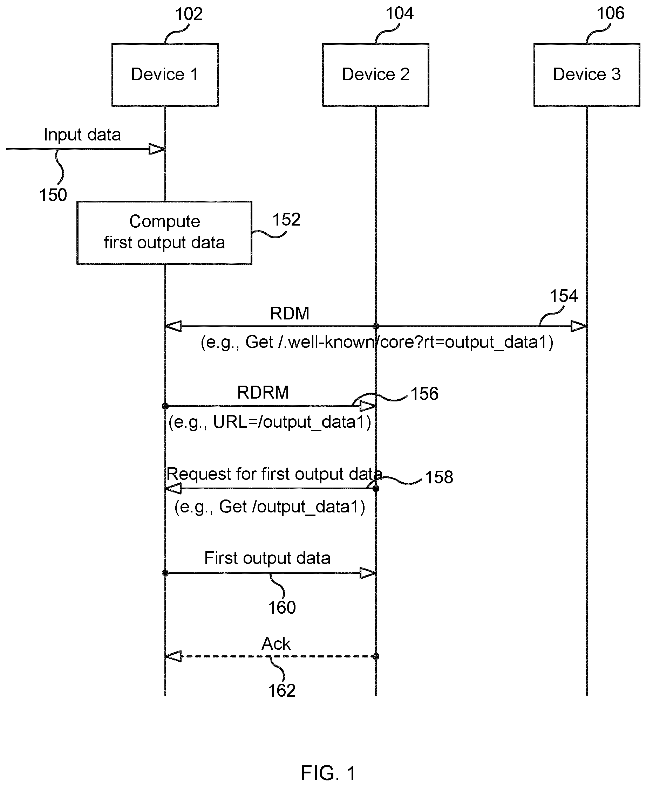

FIG. 1 illustrates a message flow 100 according to an embodiment. The message flow 100 involves devices 102, 104, and 106.

The devices 102, 104, and/or 106 may store information related to a computational graph. In some embodiments, the computational graph defines a set of operations including a first subset of one or more operations, a second subset of one or more operations, and a third subset of one or more operations. The information related to the computational graph stored in first device 102 may correspond to the first subset of operations. Similarly, the information related to the computational graph stored in the devices 104 and 106 may correspond to the second subset of operations and the third subset of operations, respectively.

In the message flow 100, first device 102 may receive input data 150. The input data 150 may originate form client 122. After receiving the input data 150, first device 102 may perform a computing operation 152 to compute first output data 160. In some embodiments, computing the first output data 160 comprises performing the first subset of operations using the received input data 150, thereby producing the first output data 160. For example, the first output data 160 may be equal to a function of the input data 150 (i.e., y = f(x) where y corresponds to the first output data 160, x corresponds to the input data 150, and f corresponds to the first subset of operations). The computed first output data 160 may be stored in first device 102.

After or before first device 102 computes the first output data 160, second device 104 may transmit a resource discovery message (RDM) 154 (e.g., GET /.well-known/core?rt=output_data1) toward a plurality of devices (e.g., the devices 102 and 106) included in the network. For example, second device 104 multicasts or broadcasts the RDM 154. The RDM 154 corresponds to a query message asking other devices (e.g., the devices 102 and 106) in the same network as second device 104 if any of them has the output data that second device 104 needs for its computation (e.g., the first output data 160). The RDM 154 may comprise a resource type value associated with the first output data 160 (e.g., "rt=output_data1" or "onnxid=layer1"). In some embodiments, the RDM 154 may be received at first device 102 by receiving an Internet Protocol (IP) packet comprising (i) a header comprising an IP destination address and (ii) a payload comprising the RDM 154. The IP destination address may be an IP multicast group address.

If the first output data 160 is stored in first device 102 at the time first device 102 receives the RDM 154, then first device 102 may transmit toward second device 104 a resource discovery response message (RDRM) 156 indicating that first device 102 has the first output data 160. The RDRM 156 may include a resource identifier (e.g., "coap://device1.com/output_data1") for retrieving the first output data 160.

In case the first output data 160 is not stored in first device 102 at the time first device 102 receives the RDM 154, first device 102 may not transmit any message or alternatively may transmit toward second device 104 a message indicating that first device 102 does not have the first output data.

After second device 104 receives the RDRM 156, second device 104 may transmit to first device 102 a request message 158 (e.g., GET /output_data1) requesting the first output data 160. The request message 158 may include the resource identifier included in the RDRM 156. In response to receiving the request message 158, first device 102 may transmit the first output data 160 toward second device 104. After receiving the first output data 160, second device 104 may optionally transmit toward first device 102 an acknowledgement message 162 acknowledging the receipt of the first output data 160.

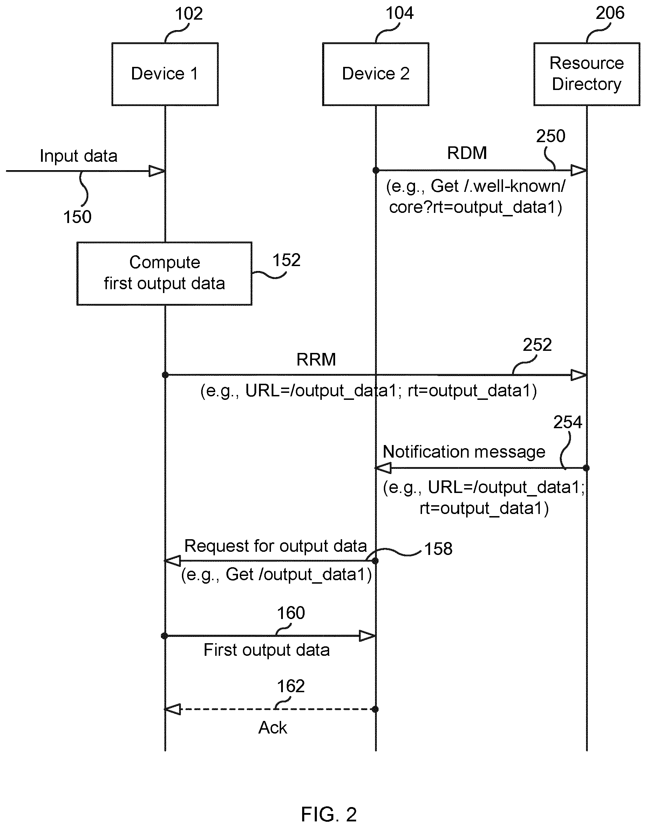

FIG. 2 illustrates a message flow 200 according to an embodiment. Message flow 200 involves devices 102, 104, and 106.

Like the message flow 100 shown in FIG. 1, in the message flow 200, first device 102 may receive the input data 150 and compute the first output data 160 using the received input data 150.

After computing the first output data 160, first device 102 may transmit toward a resource directory (RD) 206 a resource registration message (RRM) 252. The resource registration message 252 may comprise a resource type value (e.g., "rt=output_data1" or "onnxid=layer1") of the first output data 160 and a resource identifier (e.g., coap://device1.com/output_data1) for identifying the first output data 160. In this way, the RD can associate the resource identifier with the resource type and return the resource identifier to any device that queries the RD using the resource type value.

RD 206 may receive a resource discovery message (RDM) 250 transmitted by second device 104. The RDM 250 corresponds to a query message asking RD 206 if it has information about the output data that second device 104 needs for its computation (e.g., the first output data 160). That is, the RDM 250 may comprise a resource type value associated with the first output data 160 (e.g., output_data1). The RDM 250 may further comprise a request to "observe" the resource identified by the resource type value (e.g., the RDM 250 includes an "Observe Option" value that requests RD 206 to add second device 104 to a list of observers of the resource).

If RD 206 receives the RDM 250 before it receives the RRM 252 and RDM 250 does not include the request to observe the resource, then RD 206 may reply with "resource not found" message which may then cause second device to retransmit RDM 250 at some later time (this is a polling option). If RD 206 receives RDM 250 before it receives RRM 252 and RDM 250 comprises a request to observe the resource, then RD 206 may not transmit any response to RDM 250 (or may simply transmit some type of acknowledgement or other message)toward second device 104 and then after RD 206 receives the RRM 252 RD 206 transmits a notification message 254 toward second device 104 (this is a subscription option). In the event that RD 206 receives the RDM 250 after it receives the RRM 252 (i.e., once the information regarding the first output data 160 becomes available to RD 206), RD 206 may immediately transmit toward second device 104 the notification message 254. The notification message 254 may comprise the resource identifier (e.g., coap://device1.com/output_data1) identifying the first output data 160 and a device identifier allocated to the first device 102 (e.g., the first device 102's IP address or hostname).

After second device 104 receives the notification message 254, second device 104 may transmit to first device 102 a request message 158 (e.g., GET /output_data1) requesting the first output data 160. In response to receiving the request message 158, first device 102 may transmit the first output data 160 toward second device 104. After receiving the first output data 160, second device 104 may optionally transmit toward first device 102 an acknowledgement message 162 acknowledging the receipt of the first output data 160.

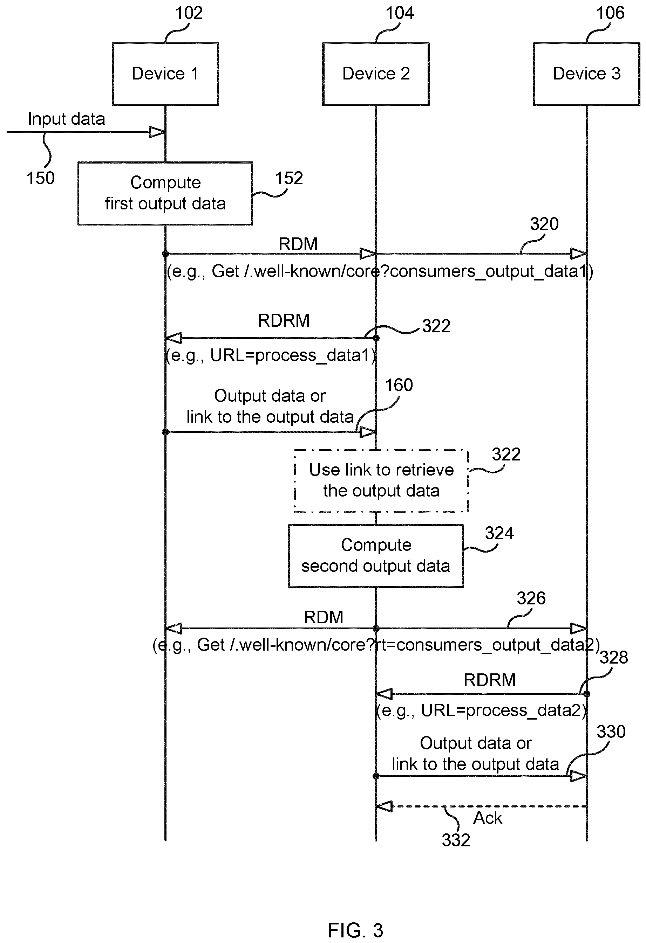

FIG. 3 illustrates a message flow 300 according to an embodiment. The message flow 300 involves devices 102, 104, and 106.

Like the message flow 100, in the message flow 300, first device 102 may receive the input data 150 and compute the first output data 160 using the received input data 150.

After computing the first output data 160, first device 102 may transmit toward the devices in the same network as first device 102 (e.g., the devices 104 and 106) a resource discovery message (RDM) 320 asking the devices in the same network if any of them needs the first output data 160. Transmitting the RDM 320 may comprise multicasting the RDM 320. The RDM 320 may comprise a resource type value (e.g., rt=consumer_output_data1) associated with the first output data 160.

In the message flow 300, because second device 104 needs the first output data 160 for its computation, second device 104 may transmit toward first device 102 a resource discovery response message (RDRM) 322 indicating that first device 102 should transmit the first output data 160 toward second device 104.

In response to receiving the RDRM 322, first device 102 may transmit toward second device 104 the first output data 160 or a link to the first output data (e.g., a Uniform Resource Locator (URL) that points to the first output data). If first device 102 transmits to second device 104 a link to the output data rather than the first output data itself, then second device 104 uses the link to retrieve the output data (step 322). For example, if the link is in the form of an HTTP URL, then second device 104 retrieves the first data 160 by transmitting to the host identified in the URL an HTTP GET message that includes the path portion and query string, if any, of the URL.

After second device 104 receives the first output data 160, second device 104 may perform a computing operation 324 to compute second output data 330.

In some embodiments, computing the second output data 330 (i.e., performing step 324) comprises performing the second subset of operations using the received first output data 160, thereby producing the second output data 330. For example, the second output data 330 may be equal to a function of the first output data 160 (i.e., y = f(x) where y corresponds to the second output data 330, x corresponds to the first output data 160, and f corresponds to the second subset of operations). The computed second output data 330 may be stored in second device 104.

After computing the second output data 330, second device 104 may transmit a resource discovery message (RDM) 326 asking the devices in the same network (e.g., the devices 102 and 106) if any of them needs the second output data 330. The RDM 326 may comprise a resource type value (e.g., rt=consumer_output_data2) associated with the second output data 330.

After receiving the RDM 326, third device 106 may transmit toward second device 104 a resource discovery response message (RDRM) 328 indicating that second device 104 should transmit the second output data 330 toward third device 106.

In response to receiving the RDRM 328, second device 104 may transmit toward third device 106 the second output data 330 (or a link to the second output data). After third device 106 receives the second output data 330 (or a link to the second output data), third device 106 may optionally transmit toward second device 104 an acknowledgement message 332 acknowledging the receipt of the second output data 330 (or a link to the second output data).

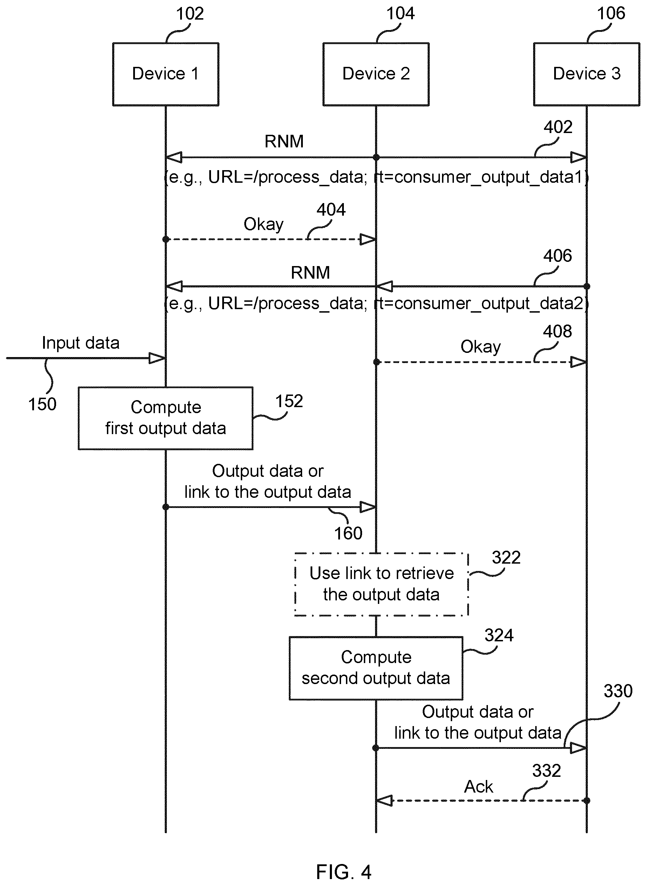

FIG. 4 illustrates a message flow 400 according to an embodiment. The message flow 400 involves devices 102, 104, and 106.

In the message flow 400, second device 104 may transmit toward the plurality of devices in the same network as second device 104 (e.g., the devices 102 and 106) a resource notification message (RNM) 402 indicating that a device that has the first output data 160 should transmit the first output data 160 (or a resource identifier for the first output data) toward second device 104. The devices 102 and 106 may receive the RNM 402 by receiving an IP packet. The IP packet may include (i) a header comprising an IP destination address and (ii) a payload comprising the RNM 402. The IP destination address may be an IP multicast group address.

Because first device 102 is configured to compute the first output data 160, after receiving the RNM 402, first device 102 may optionally transmit toward second device 104 an acknowledgement message 404 acknowledging the receipt of the RNM 402.

In the message flow 400, third device 106 may also transmit toward the plurality of devices in the same network as third device 106 (e.g., the devices 102 and 104) an RNM 406 indicating that a device that has the second output data 330 should transmit the second output data 330 (or a link to the second output data) toward third device 106. The devices 102 and 104 may receive the RNM 406 by receiving an IP packet. The IP packet may include (i) a header comprising an IP destination address and (ii) a payload comprising the RNM 406. The IP destination address may be an IP multicast group address.

Because second device 104 is configured to compute the second output data 330, after receiving the RNM 406, second device 104 may optionally transmit toward third device 106 an acknowledgement message 408 acknowledging the receipt of the RNM 406.

In the message flow 400, first device 102 may receive the input data 150. Upon receiving the input data 150, first device 102 may compute the first output data 160 using the input data 150, as discussed with respect to the message flow 100 shown in FIG. 1. Even though FIG. 4 shows that the receipt of the input data 150 and the computation of the first output data 160 occur after first device 102 receives the RNM 402, any of receiving the input data 150 and computing the first output data 160 may occur at any time. For example, first device 102 may receive the input data 150 and compute the first output data 160 before it receives the RNM 402.

After first device 102 computes the first output data 160 and receives the RNM 402 indicating that the first output data 160 (or a link to the first output data) should be sent to second device 104, first device 102 may transmit toward second device 104 the first output data 160 (or a link to the first output data).

If first device 102 transmits to second device 104 a link to the output data rather than the first output data itself, then second device 104 uses the link to retrieve the output data (step 322).

As shown in FIG. 4, after second device 104 receives the first output data 160, second device 104 may perform step 324 as described above (i.e., compute the second output data 330 using the received first output data 160).

After computing the second output data 330, second device 104 may transmit toward third device 106 the second output data 330 (or a link to the second output data).

After receiving the second output data 330 (or a link to the second output data), third device 106 may optionally transmit toward second device 104 an acknowledgement message 414 indicating the receipt of the second output data (or a link to the second output data).

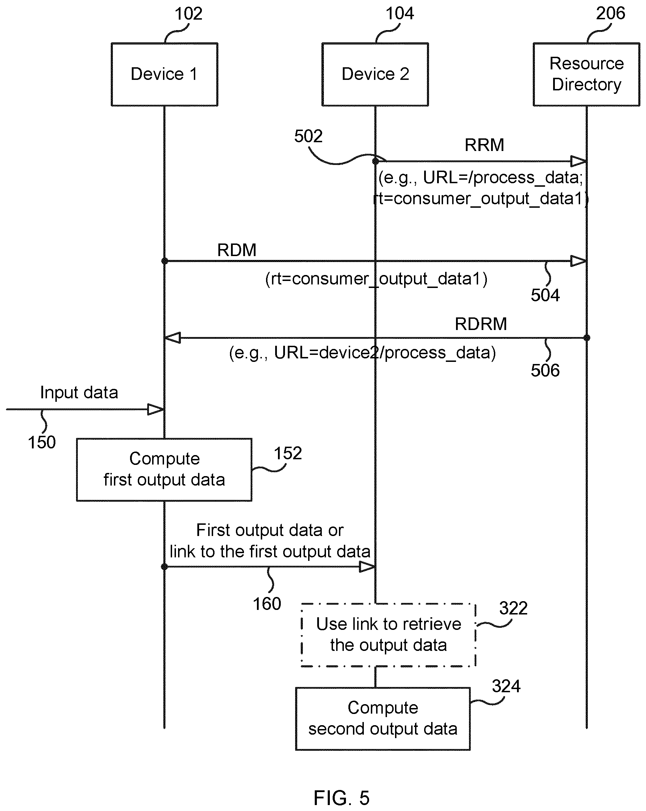

FIG. 5 illustrates a message flow 500 according to an embodiment. The message flow 500 involves devices 102, 104, and RD 206.

As shown in FIG. 5, second device 104 may transmit toward RD 206 a resource registration message (RRM) 502 indicating that second device 104 is the entity that should receive the first output data 160. The RRM 502 may include a resource identifier that identifies the first output data 160 and that identifies second device 104 as a consumer of the data (e.g., consumer_output_data1) and a device identifier identifying second device 104 (e.g., second device 104's IP address or hostname).

After RD 206 receives the RRM 502, RD 206 may also receive a resource discovery message (RDM) 504 transmitted by first device 102. The RDM 504 may correspond to a query message asking RD 206 the identity of a device to which first device 102 should transmit the first output data 160 (or a link to the first output data). In other words, the query asks RD 206 to return a query result that identifies a consumer of the first output data. In some embodiments, the RDM 504 may include a particular resource type value (e.g., rt=consumer_output_data1) associated with the first output data 160.

As a result of receiving the RRM 502 and the RDM 504, RD 206 may transmit toward first device 102 a resource discovery response message (RDRM) 506 indicating that the first output data 160 should be sent to second device 104. The RDRM 506 may include the device identifier identifying second device 104. In some cases, RD 206 may receive the RDM 504 before it receives the RRM 502 but the RDM 504 includes a request to observe the resource identified by the resource type value. In such cases, RD 206 transmits the RDRM 506 in response to RD 206 receiving the RRM 502 and RD 206 determining that device 102 is included in the list of observers for this resource. In some cases, RD 206 may receive the RDM 504 before it receives the RRM 502 and the RDM 504 does not include the request to observe the resource. In this case, first device 102 may periodically retransmit the RDM 504 until it obtains the requested resource (i.e., this is the polling option).

In the message flow 500, first device 102 may receive the input data 150. Upon receiving the input data 150, first device 102 may compute the first output data 160 using the input data 150, as discussed with respect to the message flow 100 shown in FIG. 1. Even though FIG. 5 shows that the receipt of the input data 150 and the computation of the first output data 160 occur after first device 102 receives the RDRM 506, any of receiving the input data 150 and computing the first output data 160 may occur at any time. For example, first device 102 may receive the input data 150 and compute the first output data 160 before it receives the RDRM 506.

After first device 102 computes the first output data 160 and receives the RDRM 506 indicating that the first output data 160 (or a link to the first output data) should be sent to second device 104, first device 102 may transmit toward second device 104 the first output data 160 (or a link to the first output data).

If first device 102 transmits to second device 104 a link to the output data rather than the first output data itself, then second device 104 uses the link to retrieve the output data (step 322). After second device 104 receives the first output data 160, second device 104 may perform step 324 as described above.

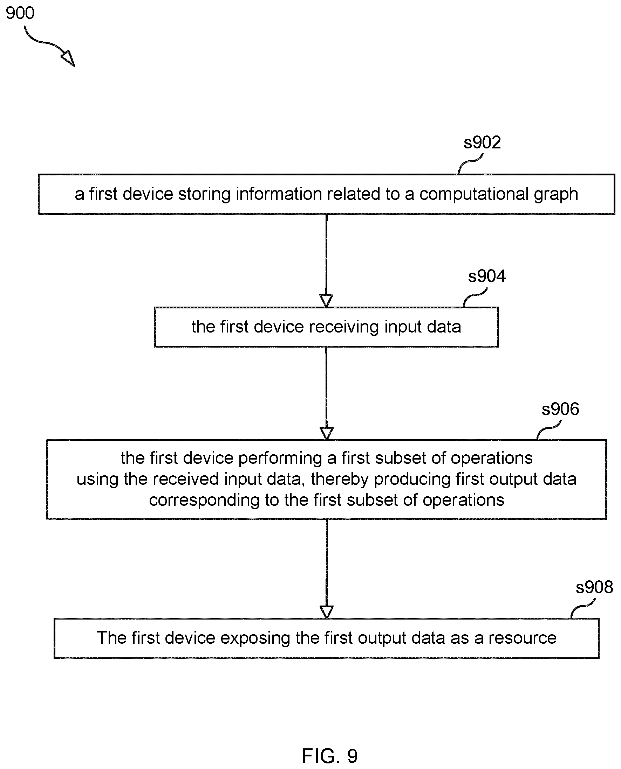

FIG. 9 is a flow chart illustrating a process 900 for generating output data in accordance with a computational graph. Process 900 may begin in step s902.

Step s902 comprises a first device storing information related to the computational graph. The computational graph may define a set of operations including a first subset of one or more operations and a second subset of one or more operations. The information related to the computational graph may comprise information representing the first subset of operations.

Step s904 comprises the first device receiving input data.

Step s906 comprises the first device performing the first subset of operations using the received input data, thereby producing first output data corresponding to the first subset of operations.

Step s908 comprises the first device exposing the first output data as a discoverable resource so that the first output data is discoverable by other devices.

In some embodiments, the process 900 comprises the first device receiving a request message (e.g., a message comprising the request "GET /output_data1") transmitted by a second device, wherein the request message requests the first output data. The process 900 may further comprise the first device transmitting the first output data toward the second device in response to receiving the request message.

In some embodiments, the process 900 comprises receiving a resource discovery message (e.g., GET /.well-known/core?rt=output_data1) transmitted by a second device. Exposing the first output data as a discoverable resource may comprise, in response to receiving the resource discovery message, transmitting toward the second device a resource discovery response message comprising a resource identifier (e.g., "coap://device1.com/output_data1" or "/output_data1") for retrieving the first output data. The process 900 may further comprise after transmitting the resource discovery response message, the first device receiving a request message (e.g., GET /output_data1) transmitted by the second device, wherein the request message comprises the resource identifier. The process 900 may further comprise the first device transmitting the first output data toward the second device in response to receiving the request message comprising the resource identifier.

In some embodiments, exposing the first output data as a discoverable resource comprises associating the first output data with a first resource type value identifying a first resource type (e.g., "rt= output_data1" or "onnxid=layer3"). The resource discovery message may comprise the first resource type value.

In some embodiments, receiving the resource discovery message comprises receiving an Internet Protocol, IP, packet comprising: i) a header comprising an IP destination address and ii) a payload comprising the resource discovery message, wherein the IP destination address is an IP multicast group address.

In some embodiments, exposing the first output data as a discoverable resource comprises associating the first output data with a first resource type value (e.g., "rt= output_data1"). The process 900 may further comprise the first device transmitting toward a resource directory a resource registration message comprising: i) the first resource type value (e.g., "rt=output_data1") and ii) a resource identifier (e.g., /output_data1) for identifying the first output data. The process 900 may further comprise the first device receiving a request message (158) (e.g., GET /output_data1) transmitted by a second device, wherein the request message requests the first output data; and the first device transmitting the first output data toward the second device in response to receiving the request message.

In some embodiments, the process 900 further comprises the second device transmitting a resource discovery message towards the resource directory, the resource discovery message comprising the first resource type value (e.g., output_data1). The process 900 may further comprise the second device receiving a notification message transmitted by the resource directory, the notification message comprising the resource identifier (e.g., /output_data1) and a device identifier allocated to the first device (e.g., the first device's IP address or hostname). The second device may transmit the request message after receiving the notification message.

In some embodiments, the process 900 further comprises the first device receiving a resource message that indicates that the first device should transmit the first output data to a second device and after receiving the resource message, the first device transmitting the first output data toward the second device.

In some embodiments, the process 900 further comprises prior to receiving the resource message, the first device transmitting a resource discovery message comprising a particular resource type value (e.g., rt=consumer_output_data1).

In some embodiments, transmitting the resource discovery message comprises multicasting the resource discovery message (i.e., transmitting an IP packet comprising the resource discovery message wherein the IP packet is addressed to a multicast group). The resource message may be transmitted by the second device in response to the resource discovery message.

In some embodiments, transmitting the resource discovery message comprises transmitting the resource discovery message after producing the first output data corresponding to the first subset of operations.

In some embodiments, receiving the resource message comprises receiving an IP packet transmitted by the second device. The IP packet may comprise: i) a header comprising an IP destination address and ii) a payload comprising the resource message. The IP destination address may be an IP multicast group address.

In some embodiments, transmitting the resource discovery message comprises transmitting the resource discovery message toward a resource directory. The resource message originated from the resource directory.

In some embodiments, the first device generates the first output data after receiving the resource message. The first device may transmit the first output data toward the second device immediately after the first device generates the first output data.

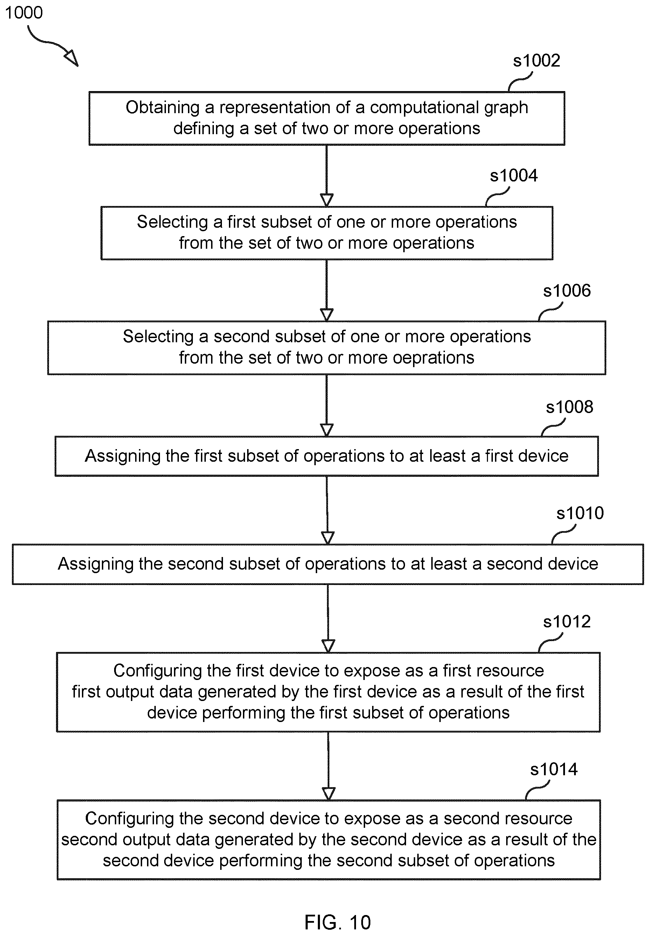

FIG. 10 is a flow chart illustrating a process 1000. Process 1000 may begin in step s1002.

Step s1002 comprises obtaining a representation of a computational graph. The computational graph defines a set of two or more operations.

Step s1004 comprises selecting a first subset of one or more operations from the set of two or more operations.

Step s1006 comprises selecting a second subset of one or more operations from the set of two or more operations.

Step s1008 comprises assigning the first subset of operations to at least a first device.

Step s1010 comprises assigning the second subset of operations to at least a second device.

Step s1012 comprises configuring the first device to expose as a first discoverable resource first output data generated by the first device as a result of the first device performing the first subset of operations.

Step s1014 comprises configuring the second device to expose as a second discoverable resource second output data generated by the second device as a result of the second device performing the second subset of operations.

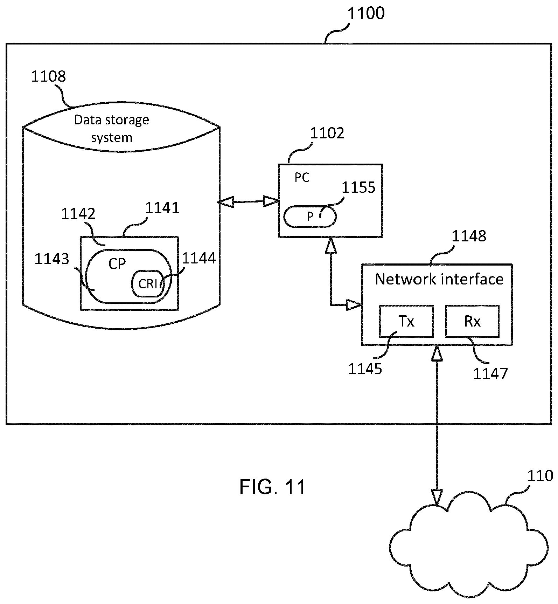

FIG. 11 is a block diagram of an apparatus 1100, according to some embodiments, for implementing any of the devices 102, 104, and 106. As shown in FIG. 11, apparatus 1100 may comprise: processing circuitry (PC) 1102, which may include one or more processors (P) 1155 (e.g., a general purpose microprocessor and/or one or more other processors, such as an application specific integrated circuit (ASIC), field-programmable gate arrays (FPGAs), and the like), which processors may be co-located in a single housing or in a single data center or may be geographically distributed (i.e., apparatus 1100 may be a distributed computing apparatus); one or more network interfaces 1148 (which may be co-located or geographically distributed) where each network interface includes a transmitter (Tx) 1145 and a receiver (Rx) 1147 for enabling apparatus 1100 to transmit data to and receive data from other nodes connected to network 110 (e.g., an Internet Protocol (IP) network) to which network interface 1148 is connected; and one or more storage units (a.k.a., "data storage systems") 1108 which may be co-located or geographically distributed and which may include one or more nonvolatile storage devices and/or one or more volatile storage devices. In embodiments where PC 1102 includes a programmable processor, a computer program product (CPP) 1141 may be provided. CPP 1141 includes a computer readable medium (CRM) 1142 storing a computer program (CP) 1143 comprising computer readable instructions (CRI) 1144. CRM 1142 may be a non-transitory computer readable medium, such as, magnetic media (e.g., a hard disk), optical media, memory devices (e.g., random access memory, flash memory), and the like. In some embodiments, the CRI 1144 of computer program 1143 is configured such that when executed by PC 1102, the CRI causes apparatus 1100 to perform steps described herein (e.g., steps described herein with reference to the flow charts). In other embodiments, apparatus 1100 may be configured to perform steps described herein without the need for code. That is, for example, PC 1102 may consist merely of one or more ASICs. Hence, the features of the embodiments described herein may be implemented in hardware and/or software.

While various embodiments are described herein, it should be understood that they have been presented by way of example only, and not limitation. The scope of protection is defined by the appended claims.

Additionally, while the processes and message flows described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method (900) for generating output data based on a computational graph, the method performed by a representational state transfer, REST, server of a REST based distributed IoT network, the method comprising:
the REST server storing (s902) information related to the computational graph, the computational graph defining a set of operations, wherein the set of operations comprises a first subset of one or more operations and a second subset of one or more operations, and further wherein the information related to the computational graph comprises information representing the first subset of operations;
the REST server receiving (s904) input data (150);
the REST server performing (s906) the first subset of operations using the received input data, thereby producing first output data (160) corresponding to the first subset of operations; and
the REST server exposing (s908) the first output data (160) as a discoverable resource by generating a link and storing the link in a resource directory, so that the first output data is discoverable using RESTful operations by other devices.

2. The method of claim 1, further comprising:
the REST server receiving a request message (158) transmitted by a second device (104), wherein the request message requests the first output data; and
the REST server transmitting the first output data (160) toward the second device in response to receiving the request message.

3. The method of claim 1, further comprising:
receiving a resource discovery message (154) transmitted by a second device (104), wherein exposing the first output data as a discoverable resource comprises, in response to receiving the resource discovery message, transmitting toward the second device a resource discovery response message (156) comprising a resource identifier for retrieving the first output data;
after transmitting the resource discovery response message (156), the REST server receiving a request message (158) transmitted by the second device, wherein the request message comprises the resource identifier; and
the REST server transmitting the first output data (160) toward the second device in response to receiving the request message comprising the resource identifier.

4. The method of claim 3, wherein
exposing the first output data as a discoverable resource comprises associating the first output data with a first resource type value identifying a first resource type, and
the resource discovery message (154) comprises the first resource type value.

5. The method of claim 1, wherein
exposing the first output data as a discoverable resource comprises associating the first output data with a first resource type value, and
the method further comprises:
the REST server transmitting toward the resource directory (206) a resource registration message (252) comprising: i) the first resource type value and ii) a resource identifier for identifying the first output data;
the REST server receiving a request message (158) transmitted by a second device (104), wherein the request message requests the first output data; and
the REST server transmitting the first output data (160) toward the second device in response to receiving the request message (158).

6. The method of claim 5, further comprising:
the second device (104) transmitting a resource discovery message (250) towards the resource directory (206), the resource discovery message (250) comprising the first resource type value; and
the second device (104) receiving a notification message (254) transmitted by the resource directory (206), the notification message comprising the resource identifier and a device identifier allocated to the REST server, wherein
the second device (104) transmits the request message (158) after receiving the notification message (254).

7. The method of claim 1, further comprising:
the REST server receiving a resource message (322, 402, 506) that indicates that the REST server should send the first output data (160) to a second device (104); and
after receiving the resource message (322, 402, 506), the REST server transmitting the first output data (160) toward the second device (104).

8. The method of claim 7, further comprising:
prior to receiving the resource message (322, 506), the REST server transmitting a resource discovery message (320, 504) comprising a particular resource type value.

9. The method of claim 8, wherein
transmitting the resource discovery message (320) comprises multicasting the resource discovery message (320) (i.e., transmitting an IP packet comprising the resource discovery message wherein the IP packet is addressed to a multicast group), and
the resource message (322) is transmitted by the second device (104) in response to the resource discovery message (320).

10. The method of claim 8 or 9, wherein transmitting the resource discovery message (320, 504) comprises transmitting the resource discovery message (320, 504) after producing (152) the first output data corresponding to the first subset of operations.

11. A method (1000), the method performed by a representational state transfer, REST, server of a REST based distributed IoT network, the method comprising:
obtaining (s1002) a representation of a computational graph, the computational graph defining a set of two or more operations;
selecting (s1004) a first subset of one or more operations from the set of two or more operations;
selecting (s1006) a second subset of one or more operations from the set of two or more operations;
assigning (s1008) the first subset of operations to at least a first device of the REST based distributed IoT network;
assigning (s1010) the second subset of operations to at least a second device of the REST based distributed IoT network;
configuring (s1012) the first device (102) to expose as a first discoverable resource first output data generated by the first device (102) as a result of the first device (102) performing the first subset of operations; and
configuring (s1014) the second device to expose as a second discoverable resource second output data generated by the second device as a result of the second device performing the second subset of operations.

12. A computer program (1143) comprising instructions (1144) which when executed by processing circuitry (1102) cause the processing circuitry (1102) to perform the method of any one of claims 1-11.

13. A Representational state transfer, REST, server for generating output data based on a computational graph, the REST server being a first device of a REST based distributed IoT network, the REST server being adapted to:
store (s902) information related to the computational graph, the computational graph defining a set of operations, wherein the set of operations comprises a first subset of one or more operations and a second subset of one or more operations, and further wherein the information related to the computational graph comprises information representing the first subset of operations;
receive (s904) input data (150);
perform (s906) the first subset of operations using the received input data, thereby producing first output data (160) corresponding to the first subset of operations; and
expose (s908) the first output data (160) as a discoverable resource by generating a link and storing the link in a resource directory, so that the first output data is discoverable using RESTful operations by other devices.

14. The apparatus of claim 13, wherein the REST server is further adapted to perform the method of any one of claims 2-10.

15. A Representational state transfer, REST, server, of a REST based distributed IoT network, the REST server being adapted to:
obtain (s1002) a representation of a computational graph, the computational graph defining a set of two or more operations;
select (s1004) a first subset of one or more operations from the set of two or more operations;
select (s1006) a second subset of one or more operations from the set of two or more operations;
assign (s1008) the first subset of operations to at least a first device of the REST based distributed IoT network;
assign (s1010) the second subset of operations to at least a second device of the REST based distributed IoT network;
configure (s1012) the first device (102) to expose as a first discoverable resource first output data generated by the first device (102) as a result of the first device (102) performing the first subset of operations; and
configure (s1014) the second device to expose as a second discoverable resource second output data generated by the second device as a result of the second device performing the second subset of operations.

## Patentansprüche

1. Verfahren (900) zum Generieren von Ausgabedaten basierend auf einem Berechnungsgraphen, wobei das Verfahren von einem Representational State Transfer-Server, REST-Server, eines REST-basierten verteilten IoT-Netzwerks durchgeführt wird, wobei das Verfahren umfasst, dass:
der REST-Server Informationen in Bezug auf den Berechnungsgraphen speichert (s902), wobei der Berechnungsgraph einen Satz von Operationen definiert, wobei der Satz von Operationen eine erste Teilmenge einer oder mehrerer Operationen und eine zweite Teilmenge einer oder mehrerer Operationen umfasst, und wobei ferner die Informationen in Bezug auf den Berechnungsgraphen Informationen umfassen, die die erste Teilmenge von Operationen darstellen;
der REST-Server Eingabedaten (150) empfängt (s904);
der REST-Server die erste Teilmenge von Operationen unter Verwendung der empfangenen Eingabedaten ausführt (s906), um dadurch erste Ausgabedaten (160) zu generieren, die der ersten Teilmenge von Operationen entsprechen; und
der REST-Server die ersten Ausgabedaten (160) durch Generieren eines Links und Speichern des Links in einem Ressourcenverzeichnis als eine erkennbare Ressource exponiert (s908), so dass die ersten Ausgabedaten unter Verwendung von RESTful-Operationen durch andere Vorrichtungen erkannt werden können.

2. Verfahren nach Anspruch 1, ferner umfassend, dass:
der REST-Server eine Anforderungsnachricht (158) empfängt, die von einer zweiten Vorrichtung (104) übertragen wird, wobei die Anforderungsnachricht die ersten Ausgabedaten anfordert; und
der REST-Server die ersten Ausgabedaten (160) in Reaktion auf den Empfang der Anforderungsnachricht an die zweite Vorrichtung überträgt.

3. Verfahren nach Anspruch 1, ferner umfassend:
Empfangen einer Ressourcenerkennungsnachricht (154), die von einer zweiten Vorrichtung (104) übertragen wird, wobei das Exponieren der ersten Ausgabedaten als eine erkennbare Ressource Übertragen einer Ressourcenerkennungsantwortnachricht (156), die eine Ressourcenkennung zum Abrufen der ersten Ausgabedaten umfasst, in Reaktion auf den Empfang der Ressourcenerkennungsnachricht an die zweite Vorrichtung umfasst;
nach dem Übertragen der Ressourcenerkennungsantwortnachricht (156) Empfangen einer Anforderungsnachricht (158) durch den REST-Server, die von der zweiten Vorrichtung übertragen wird, wobei die Anforderungsnachricht die Ressourcenkennung umfasst; und
Übertragen der ersten Ausgabedaten (160) durch den REST-Server in Reaktion auf den Empfang der Anforderungsnachricht mit der Ressourcenkennung an die zweite Vorrichtung.

4. Verfahren nach Anspruch 3, wobei
das Exponieren der ersten Ausgabedaten als eine erkennbare Ressource Assoziieren der ersten Ausgabedaten mit einem ersten Ressourcentypwert umfasst, der einen ersten Ressourcentyp identifiziert, und
die Ressourcenerkennungsnachricht (154) den ersten Ressourcentypwert umfasst.

5. Verfahren nach Anspruch 1, wobei
das Exponieren der ersten Ausgabedaten als eine erkennbare Ressource Assoziieren der ersten Ausgabedaten mit einem ersten Ressourcentypwert umfasst, und
das Verfahren ferner umfasst, dass:
der REST-Server eine Ressourcenregistrierungsnachricht (252) an das Ressourcenverzeichnis (206) überträgt, die Folgendes umfasst: i) den ersten Ressourcentypwert und ii) eine Ressourcenkennung zum Identifizieren der ersten Ausgabedaten;
der REST-Server eine Anforderungsnachricht (158) empfängt, die von einer zweiten Vorrichtung (104) übertragen wird, wobei die Anforderungsnachricht die ersten Ausgabedaten anfordert; und
der REST-Server die ersten Ausgabedaten (160) in Reaktion auf den Empfang der Anforderungsnachricht (158) an die zweite Vorrichtung überträgt.

6. Verfahren nach Anspruch 5, ferner umfassend, dass:
die zweite Vorrichtung (104) eine Ressourcenerkennungsnachricht (250) an das Ressourcenverzeichnis (206) sendet, wobei die Ressourcenerkennungsnachricht (250) den ersten Ressourcentypwert umfasst; und
die zweite Vorrichtung (104) eine Benachrichtigungsnachricht (254) empfängt, die von dem Ressourcenverzeichnis (206) übertragen wird, wobei die Benachrichtigungsnachricht die Ressourcenkennung und eine dem REST-Server zugewiesene Vorrichtungskennung umfasst, wobei
die zweite Vorrichtung (104) die Anforderungsnachricht (158) nach dem Empfang der Benachrichtigungsnachricht (254) überträgt.

7. Verfahren nach Anspruch 1, ferner umfassend, dass:
der REST-Server eine Ressourcennachricht (322, 402, 506) empfängt, die angibt, dass der REST-Server die ersten Ausgabedaten (160) an eine zweite Vorrichtung (104) senden sollte; und
der REST-Server nach dem Empfang der Ressourcennachricht (322, 402, 506) die ersten Ausgabedaten (160) an die zweite Vorrichtung (104) überträgt.

8. Verfahren nach Anspruch 7, ferner umfassend, dass:
der REST-Server vor dem Empfangen der Ressourcennachricht (322, 506) eine Ressourcenerkennungsnachricht (320, 504) überträgt, die einen spezifischen Ressourcentypwert umfasst.

9. Verfahren nach Anspruch 8, wobei
das Übertragen der Ressourcenerkennungsnachricht (320) Senden der Ressourcenerkennungsnachricht (320) per Multicasting umfasst (d. h. Übertragen eines IP-Pakets, das die Ressourcenerkennungsnachricht umfasst, wobei das IP-Paket an eine Multicast-Gruppe adressiert ist), und
die Ressourcennachricht (322) von der zweiten Vorrichtung (104) in Reaktion auf die Ressourcenerkennungsnachricht (320) übertragen wird.

10. Verfahren nach Anspruch 8 oder 9, wobei das Übertragen der Ressourcenerkennungsnachricht (320, 504) Übertragen der Ressourcenerkennungsnachricht (320, 504) nach dem Erzeugen (152) der ersten Ausgabedaten umfasst, die der ersten Teilmenge von Operationen entsprechen.

11. Verfahren (1000), wobei das Verfahren von einem Representational State Transfer-Server, REST-Server, eines REST-basierten verteilten IoT-Netzwerks durchgeführt wird, wobei das Verfahren Folgendes umfasst:
Erhalten (s1002) einer Darstellung eines Berechnungsgraphen, wobei der Berechnungsgraph einen Satz von zwei oder mehr Operationen definiert;
Auswählen (s1004) einer ersten Teilmenge einer oder mehrerer Operationen aus dem Satz von zwei oder mehr Operationen;
Auswählen (s1006) einer zweiten Teilmenge einer oder mehrerer Operationen aus dem Satz von zwei oder mehr Operationen;
Zuordnen (s1008) der ersten Teilmenge von Operationen zu mindestens einer ersten Vorrichtung des REST-basierten verteilten IoT-Netzwerks;
Zuordnen (s1010) der zweiten Teilmenge von Operationen zu mindestens einer zweiten Vorrichtung des REST-basierten verteilten IoT-Netzwerks;
Konfigurieren (s1012) der ersten Vorrichtung (102), um als Ergebnis dessen, dass die erste Vorrichtung (102) die erste Teilmenge von Operationen ausführt, erste Ausgabedaten, die von der ersten Vorrichtung (102) generiert werden, als eine erste erkennbare Ressource zu exponieren; und
Konfigurieren (s1014) der zweiten Vorrichtung, um als Ergebnis dessen, dass die zweite Vorrichtung die zweite Teilmenge von Operationen ausführt, zweite Ausgabedaten, die von der zweiten Vorrichtung generiert werden, als eine zweite erkennbare Ressource zu exponieren.

12. Computerprogramm (1143), umfassend Anweisungen (1144), die bei Ausführung durch Verarbeitungsschaltungsanordnung (1102) die Verarbeitungsschaltungsanordnung (1102) zum Durchführen des Verfahrens nach einem der Ansprüche 1-11 veranlassen.

13. Representational State Transfer-Server, REST-Server, zum Generieren von Ausgabedaten basierend auf einem Berechnungsgraphen, wobei der REST-Server eine erste Vorrichtung eines REST-basierten verteilten IoT-Netzwerks ist, wobei der REST-Server zu Folgendem ausgelegt ist:
Speichern (s902) von Informationen in Bezug auf den Berechnungsgraphen, wobei der Berechnungsgraph einen Satz von Operationen definiert, wobei der Satz von Operationen eine erste Teilmenge einer oder mehrerer Operationen und eine zweite Teilmenge einer oder mehrerer Operationen umfasst, und wobei ferner die Informationen in Bezug auf den Berechnungsgraphen Informationen umfassen, die die erste Teilmenge von Operationen darstellen;
Empfangen (s904) von Eingabedaten (150);
Ausführen (s906) der ersten Teilmenge von Operationen unter Verwendung der empfangenen Eingabedaten, um dadurch erste Ausgabedaten (160) zu generieren, die der ersten Teilmenge von Operationen entsprechen; und
Exponieren (s908) der ersten Ausgabedaten (160) durch Generieren eines Links und Speichern des Links in einem Ressourcenverzeichnis als eine erkennbare Ressource, so dass die ersten Ausgabedaten unter Verwendung von RESTful-Operationen durch andere Vorrichtungen erkannt werden können.

14. Vorrichtung nach Anspruch 13, wobei der REST-Server ferner zum Durchführen des Verfahrens nach einem der Ansprüche 2-10 ausgelegt ist.

15. Representational State Transfer-Server, REST-Server, eines REST-basierten verteilten IoT-Netzwerks, wobei der REST-Server zu Folgendem ausgelegt ist:
Erhalten (s1002) einer Darstellung eines Berechnungsgraphen, wobei der Berechnungsgraph einen Satz von zwei oder mehr Operationen definiert;
Auswählen (s1004) einer ersten Teilmenge einer oder mehrerer Operationen aus dem Satz von zwei oder mehr Operationen;
Auswählen (s1006) einer zweiten Teilmenge einer oder mehrerer Operationen aus dem Satz von zwei oder mehr Operationen;
Zuordnen (s1008) der ersten Teilmenge von Operationen zu mindestens einer ersten Vorrichtung des REST-basierten verteilten IoT-Netzwerks;
Zuordnen (s1010) der zweiten Teilmenge von Operationen zu mindestens einer zweiten Vorrichtung des REST-basierten verteilten IoT-Netzwerks;
Konfigurieren (s1012) der ersten Vorrichtung (102), um als Ergebnis dessen, dass die erste Vorrichtung (102) die erste Teilmenge von Operationen ausführt, erste Ausgabedaten, die von der ersten Vorrichtung (102) generiert werden, als eine erste erkennbare Ressource zu exponieren; und
Konfigurieren (s1014) der zweiten Vorrichtung, um als Ergebnis dessen, dass die zweite Vorrichtung die zweite Teilmenge von Operationen ausführt, zweite Ausgabedaten, die von der zweiten Vorrichtung generiert werden, als eine zweite erkennbare Ressource zu exponieren.

## Revendications

1. Procédé (900) pour générer des données de sortie sur la base d'un graphe de calcul, le procédé étant réalisé par un serveur de transfert d'état représentationnel, REST, d'un réseau IoT distribué basé sur REST, le procédé comprenant :
par le serveur REST, le stockage (s902) d'informations liées au graphe de calcul, le graphe de calcul définissant un ensemble d'opérations, dans lequel l'ensemble d'opérations comprend un premier sous-ensemble d'une ou plusieurs opérations et un deuxième sous-ensemble d'une ou plusieurs opérations, et en outre dans lequel les informations liées au graphe de calcul comprennent des informations représentant le premier sous-ensemble d'opérations ;
par le serveur REST, la réception (s904) de données d'entrée (150) ;
par le serveur REST, la réalisation (s906) du premier sous-ensemble d'opérations à l'aide des données d'entrée reçues, en produisant ainsi des premières données de sortie (160) correspondant au premier sous-ensemble d'opérations ; et
par le serveur REST, l'exposition (s908) des premières données de sortie (160) en tant que ressource découvrable par la génération d'un lien et le stockage du lien dans un répertoire de ressources, de sorte que les premières données de sortie soient découvrables à l'aide d'opérations RESTful par d'autres dispositifs.

2. Procédé selon la revendication 1, comprenant en outre :
par le serveur REST, la réception d'un message de demande (158) transmis par un deuxième dispositif (104), dans lequel le message de demande demande les premières données de sortie ; et
par le serveur REST, la transmission des premières données de sortie (160) au deuxième dispositif en réponse à la réception du message de demande.

3. Procédé selon la revendication 1, comprenant en outre :
la réception d'un message de découverte de ressource (154) transmis par un deuxième dispositif (104), dans lequel l'exposition des premières données de sortie en tant que ressource découvrable comprend, en réponse à la réception du message de découverte de ressource, la transmission, au deuxième dispositif, d'un message de réponse de découverte de ressource (156) comprenant un identifiant de ressource pour récupérer les premières données de sortie ;
après la transmission du message de réponse de découverte de ressource (156), la réception, par le serveur REST, d'un message de demande (158) transmis par le deuxième dispositif, dans lequel le message de demande comprend l'identifiant de ressource ; et
par le serveur REST, la transmission des premières données de sortie (160) au deuxième dispositif en réponse à la réception du message de demande comprenant l'identifiant de ressource.

4. Procédé selon la revendication 3, dans lequel
l'exposition des premières données de sortie en tant que ressource découvrable comprend l'association des premières données de sortie à une première valeur de type de ressource identifiant un premier type de ressource, et
le message de découverte de ressource (154) comprend la première valeur de type de ressource.

5. Procédé selon la revendication 1, dans lequel
l'exposition des premières données de sortie en tant que ressource découvrable comprend l'association des premières données de sortie à une première valeur de type de ressource, et
le procédé comprend en outre :
par le serveur REST, la transmission, au répertoire de ressources (206), d'un message d'enregistrement de ressource (252) comprenant : i) la première valeur de type de ressource et ii) un identifiant de ressource pour identifier les premières données de sortie ;
par le serveur REST, la réception d'un message de demande (158) transmis par un deuxième dispositif (104), dans lequel le message de demande demande les premières données de sortie ; et
par le serveur REST, la transmission des premières données de sortie (160) au deuxième dispositif en réponse à la réception du message de demande (158).

6. Procédé selon la revendication 5, comprenant en outre :
par le deuxième dispositif (104), la transmission d'un message de découverte de ressource (250) au répertoire de ressources (206), le message de découverte de ressource (250) comprenant la première valeur de type de ressource ; et
par le deuxième dispositif (104), la réception d'un message de notification (254) transmis par le répertoire de ressources (206), le message de notification comprenant l'identifiant de ressource et un identifiant de dispositif alloué au serveur REST, dans lequel
le deuxième dispositif (104) transmet le message de demande (158) après la réception du message de notification (254).

7. Procédé selon la revendication 1, comprenant en outre :
par le serveur REST, la réception d'un message de ressource (322, 402, 506) qui indique que le serveur REST doit envoyer les premières données de sortie (160) à un deuxième dispositif (104) ; et
après la réception du message de ressource (322, 402, 506), la transmission, par le serveur REST, des premières données de sortie (160) au deuxième dispositif (104).

8. Procédé selon la revendication 7, comprenant en outre : avant la réception du message de ressource (322, 506), la transmission, par le serveur REST, d'un message de découverte de ressource (320, 504) comprenant une valeur de type de ressource particulière.

9. Procédé selon la revendication 8, dans lequel
la transmission du message de découverte de ressource (320) comprend la multidiffusion du message de découverte de ressource (320) (c'est-à-dire la transmission d'un paquet IP comprenant le message de découverte de ressource dans lequel le paquet IP est adressé à un groupe de multidiffusion), et
le message de ressource (322) est transmis par le deuxième dispositif (104) en réponse au message de découverte de ressource (320).

10. Procédé selon la revendication 8 ou 9, dans lequel la transmission du message de découverte de ressource (320, 504) comprend la transmission du message de découverte de ressource (320, 504) après la production (152) des premières données de sortie correspondant au premier sous-ensemble d'opérations.

11. Procédé (1000), le procédé étant réalisé par un serveur de transfert d'état représentationnel, REST, d'un réseau IoT distribué basé sur REST, le procédé comprenant :
l'obtention (s1002) d'une représentation d'un graphe de calcul, le graphe de calcul définissant un ensemble de deux opérations ou plus ;
la sélection (s1004) d'un premier sous-ensemble d'une ou plusieurs opérations parmi l'ensemble de deux opérations ou plus ;
la sélection (s1006) d'un deuxième sous-ensemble d'une ou plusieurs opérations parmi l'ensemble de deux opérations ou plus ;
l'attribution (s1008) du premier sous-ensemble d'opérations à au moins un premier dispositif du réseau IoT distribué basé sur REST ;
l'attribution (s1010) du deuxième sous-ensemble d'opérations à au moins un deuxième dispositif du réseau IoT distribué basé sur REST ;
la configuration (s1012) du premier dispositif (102) pour exposer, en tant que première ressource découvrable, des premières données de sortie générées par le premier dispositif (102) sous l'effet de la réalisation, par le premier dispositif (102), du premier sous-ensemble d'opérations ; et
la configuration (s1014) du deuxième dispositif pour exposer, en tant que deuxième ressource découvrable, des deuxièmes données de sortie générées par le deuxième dispositif sous l'effet de la réalisation, par le deuxième dispositif, du deuxième sous-ensemble d'opérations.

12. Programme informatique (1143) comprenant des instructions (1144) qui, lorsqu'elles sont exécutées par une circuiterie de traitement (1102), amènent la circuiterie de traitement (1102) à réaliser le procédé selon l'une quelconque des revendications 1 à 11.

13. Serveur de transfert d'état représentationnel, REST, pour générer des données de sortie sur la base d'un graphe de calcul, le serveur REST étant un premier dispositif d'un réseau IoT distribué basé sur REST, le serveur REST étant adapté pour :
stocker (s902) des informations liées au graphe de calcul, le graphe de calcul définissant un ensemble d'opérations, dans lequel l'ensemble d'opérations comprend un premier sous-ensemble d'une ou plusieurs opérations et un deuxième sous-ensemble d'une ou plusieurs opérations, et en outre dans lequel les informations liées au graphe de calcul comprennent des informations représentant le premier sous-ensemble d'opérations ;
recevoir (s904) des données d'entrée (150) ;
réaliser (s906) le premier sous-ensemble d'opérations à l'aide des données d'entrée reçues, en produisant ainsi des premières données de sortie (160) correspondant au premier sous-ensemble d'opérations ; et
exposer (s908) les premières données de sortie (160) en tant que ressource découvrable par la génération d'un lien et le stockage du lien dans un répertoire de ressources, de sorte que les premières données de sortie soient découvrables à l'aide d'opérations RESTful par d'autres dispositifs.

14. Appareil selon la revendication 13, dans lequel le serveur REST est en outre adapté pour réaliser le procédé selon l'une quelconque des revendications 2 à 10.

15. Serveur de transfert d'état représentationnel, REST, d'un réseau IoT distribué basé sur REST, le serveur REST étant adapté pour :
obtenir (s1002) une représentation d'un graphe de calcul, le graphe de calcul définissant un ensemble de deux opérations ou plus ;
sélectionner (s1004) un premier sous-ensemble d'une ou plusieurs opérations parmi l'ensemble de deux opérations ou plus ;
sélectionner (s1006) un deuxième sous-ensemble d'une ou plusieurs opérations parmi l'ensemble de deux opérations ou plus ;
attribuer (s1008) le premier sous-ensemble d'opérations à au moins un premier dispositif du réseau IoT distribué basé sur REST ;
attribuer (s1010) le deuxième sous-ensemble d'opérations à au moins un deuxième dispositif du réseau IoT distribué basé sur REST ;
configurer (s1012) le premier dispositif (102) pour exposer, en tant que première ressource découvrable, des premières données de sortie générées par le premier dispositif (102) sous l'effet de la réalisation, par le premier dispositif (102), du premier sous-ensemble d'opérations ; et
configurer (s1014) le deuxième dispositif pour exposer, en tant que deuxième ressource découvrable, des deuxièmes données de sortie générées par le deuxième dispositif sous l'effet de la réalisation, par le deuxième dispositif, du deuxième sous-ensemble d'opérations.
